# DEMANDE DE BREVET EUROPEEN

(11) **EP 3 469 938 A1**
(43) Date de publication de la demande: **17.04.2019**
(21) Numéro de dépôt: 18200190.9
(22) Date de dépôt: 12.10.2018
(51) Int. Cl.: A41D 3/00, A41H 43/04, A41H 43/02, B29C 51/14

(54) **PRODUIT D'HABILLEMENT ET PROCÉDÉ DE FABRICATION D'UN TEL PRODUIT D'HABILLEMENT**

(30) Priorité: 12.10.2017 FR 1759574
(71) Demandeur: Toptex Cube, 38150 Chanas (FR)
(72) Inventeur: NOCA, Laurent, 26390 HAUTERIVES (FR)
(74) Mandataire: Chevalier, Renaud Philippe

(57) **Abrégé**

L'invention porte principalement sur un produit d'habillement (100) comprenant au moins un buste (103), et deux manches (101), le produit d'habillement (100) étant formé d'au moins deux sous-ensembles (10), chaque sous-ensemble (10) étant en textile technique (12) au moins partiellement déformé plastiquement entre 10% et 70% délimitant ainsi chacun un volume ouvert, les deux-sous-ensembles (10) étant réunis par une zone d'assemblage (11) continue s'inscrivant dans un plan transverse médian (202).

## Description

La présente invention concerne le domaine de l'habillement textile et particulièrement les vêtements réalisés en textile dit « textile technique ».

Dans la présente invention, on entendra par « textile technique », un tricot, un tissu, un non-tissé, etc., comprenant des fibres dites « fibres techniques » permettant de conférer au textile technique des caractéristiques spécifiques telles que l'imperméabilité, la résistance mécanique, la résistance au feu, la conductivité électrique, l'anti-statisme, l'isolation, etc. Par exemple, un textile technique peut être réalisé au moins partiellement à partir de fibres en polyamide, polyester, polypropylène, etc.

Grâce notamment au sport et aux besoins d'habillement spécifiques à certaines disciplines sportives, le domaine de l'habillement en textile technique a beaucoup évolué. En effet, il a été développé un matériau appelé Gore-tex® conférant aux vêtements, des propriétés d'imperméabilité, de respiration et de coupe-vent. Ces vêtements en textile technique sont devenus une gamme particulière de vêtements appelée « vêtements techniques » et décomposant en deux catégories principales : les « Softshell » et les « Hardshell » qui en français peuvent être traduits respectivement par « enveloppe souple » et « enveloppe rigide ». Les vêtements de la première catégorie « enveloppe souple » permettent une protection contre les faibles intempéries, tandis que les vêtements de la deuxième catégorie « enveloppe rigide » permettent une protection imperméable et respirante contre les intempéries telles que la pluie, la neige, la grêle et le vent. Ces vêtements techniques, quelle que soit leur catégorie sont confectionnés traditionnellement en couture avec des éléments de patronage plat qui sont assemblés et qui en fonction des objectifs de technicité du vêtement, sont doublés ou rigidifiés sur certaines zones d'assemblages.

Ainsi, les vêtements techniques de la deuxième catégorie qui sont plus rigides que les vêtements de la première catégorie, présentent certains inconvénients et notamment de présenter une coupe rigide non ajustée, moins fluide, et basique ce qui est dû notamment à la rigidification des zones d'assemblage de l'intérieur pour une meilleure résistance à la pénétration de l'eau qui ne permet d'avoir des coupes ajustées ou complexes. En outre, ces vêtements sont réalisés par un procédé d'assemblage classique en couture et donc difficile notamment à cause du nombre conséquent de pièces à assembler et à cause de la rigidification des zones d'assemblage.

L'invention s'inscrit dans la deuxième catégorie « enveloppe rigide » de vêtement technique et vise à remédier à tout ou partie des inconvénients précités et notamment à proposer un produit d'habillement ou un sous-ensemble pour produit d'habillement réalisé en textile technique avec un nombre très restreint de pièces donc avec des zones d'assemblage minimisées permettant ainsi de faciliter le procédé de fabrication et au niveau du produit d'habillement de pouvoir avoir des coupes ajustées tout en conférant une liberté de mouvement accrue par rapport à l'état de la technique.

À cet effet, l'invention a pour objet un produit d'habillement comprenant au moins un buste, et deux manches, le produit d'habillement étant formé d'au moins deux sous-ensembles, chaque sous-ensemble étant en textile technique au moins partiellement déformé plastiquement entre 10% et 70% délimitant ainsi chacun un volume ouvert, les deux sous-ensembles étant réunis par une zone d'assemblage continue s'inscrivant dans un plan transverse médian.

Le produit d'habillement selon l'invention présente l'avantage d'être réalisé en un minimum de sous-ensembles, ce qui implique une réduction des zones d'assemblage et donc une simplicité et une rapidité de confection du produit d'habillement. En outre le positionnement d'une zone d'assemblage selon un plan transverse médian permet de ne pas altérer la coupe du produit d'habillement, tout en conservant sa tenue tridimensionnelle.

En outre, la présence d'une unique zone d'assemblage ou d'un nombre réduit de zones d'assemblage permet une plus grande élasticité du produit d'habillement, car les zones rigidifiant le produit d'habillement sont réduites.

Par ailleurs, cette réduction de zone d'assemblage permet d'améliorer l'imperméabilité et la résistance du produit d'habillement, car ledit produit d'habillement présente moins de zones dans lesquelles l'eau est susceptible de s'infiltrer.

De plus, la déformation partielle de chaque sous-ensemble permet d'améliorer le confort du produit d'habillement car, en déformant tous les ensembles du produit d'habillement, le nombre de zones d'assemblage est réduit et la coupe du produit d'habillement peut être plus ajustée. Avantageusement, les déformations peuvent être prévues sur le produit d'habillement pour correspondre aux articulations du corps afin d'augmenter l'ergonomie du produit d'habillement et permettre une fluidité de mouvement de l'utilisateur dudit produit d'habillement.

Dans la présente invention, l'utilisation du terme « plan » est mathématique : il s'agit d'un objet référentiel à deux dimensions, ledit plan peut ne pas être plat ou plan.

Dans la présente invention, on entend par « plan médian transverse » un plan séparant l'avant du produit d'habillement de l'arrière.

Dans la présente invention, on entend par « plan médian sagittal » un plan séparant un côté droit du produit d'habillement d'un côté gauche.

Selon une caractéristique de l'invention, lequel l'assemblage du premier et du deuxième sous-ensembles est réalisé par thermocollage ou soudure.

Selon une caractéristique de l'invention, chaque sous-ensemble peut être sélectionné parmi une capuche ou une demi-capuche ou une manche ou un demi haut du corps latéral avant ou arrière ou un demi haut du corps complet avant ou arrière ou une jambe ou un demi bas de corps complet avant ou arrière ou une combinaison de plusieurs de ces pièces.

Selon une caractéristique de l'invention, au moins un sous-ensemble comprend un empiècement réfléchissant et/ou de renfort et/ou de confort.

Selon une caractéristique de l'invention, le produit d'habillement comprend une pluralité de sous-ensembles sont réunis par au moins deux zones d'assemblage continues, la première zone d'assemblage s'inscrivant dans un plan transverse médian et la deuxième zone d'assemblage s'inscrivant dans un plan sagittal médian.

L'invention porte également sur un procédé de fabrication d'un produit d'habillement selon l'invention, caractérisé en ce que le procédé de fabrication comprend au moins les étapes suivantes :
- Création d'un premier sous-ensemble et d'un deuxième sous-ensemble par :
   - Fourniture d'un flan de textile technique,
   - Mise en forme du flan par chauffage et emboutissage selon une forme déterminée de manière à déformer le flan selon la forme déterminée, la déformation étant au moins partielle entre 10% et 70% et irréversible et réalisée sous chaleur, l'emboutissage étant réalisé sur un poste de formage comprenant au moins un outillage de déformation non chauffé et conforme à la forme déterminée, le flan déformé présentant un volume déterminé constant irréversible,
   - Détourage du flan mis en forme,
   - Assemblage du premier et du deuxième sous-ensembles.

Grâce à l'invention, en une seule opération de mise en forme, on obtient un produit d'habillement tridimensionnel de faible épaisseur et souple, présentant une tenue tridimensionnelle même quand ce dernier n'est pas porté. En outre, le procédé de fabrication dudit produit d'habillement est conséquemment facilité et simplifié car on réalise en un produit d'habillement en une seule opération d'assemblage lorsque ledit produit d'habillement ne compte que deux sous-ensembles. Ce procédé contrairement aux procédés classiques de confection de produit d'habillement est totalement automatisable, ce qui est moins coûteux, de par le peu de zones d'assemblage et du nombre réduit de pièces de confection.

Selon une forme de réalisation de l'invention, lorsque le produit d'habillement n'est formé qu'à partir de deux sous-ensembles, la ligne d'assemblage s'étendant dans un plan sagittal médian du produit d'habillement ou dans un plan transverse médian du produit d'habillement. Selon l'invention, le plan sagittal médian d'un produit d'habillement sépare le côté droit du côté gauche. En outre, selon l'invention, le plan transverse médian d'un produit d'habillement sépare l'avant du produit d'habillement de l'arrière.

Selon une forme de réalisation de l'invention, le textile technique est un complexe textile comprenant une pluralité de couches dont au moins une en textile.

Selon une forme de réalisation de l'invention, le textile technique est un complexe textile comprenant au moins une couche de textile technique.

Selon une caractéristique de l'invention, la au moins une couche de textile du complexe textile est de type chaine et trame présentant des propriétés permettant le formage à chaud, par exemple le thermoformage ou l'emboutissage à chaud et le maintien de la forme après formage.

Selon une caractéristique de l'invention, le textile technique multicouche peut comprendre une couche en film polyuréthane par exemple.

Selon une forme de réalisation de l'invention, le détourage du flan mis en forme peut être réalisé par découpe laser, ciseaux ou emporte-pièce.

Selon une forme de réalisation de l'invention, lors du détourage, l'outil de détourage peut permettre la création d'une ou plusieurs fentes ou évidements configurés pour l'intégration d'accessoires ou pour la création de poche.

Selon une forme de réalisation de l'invention, les accessoires peuvent être des zips ou des systèmes de fermetures autre.

Selon une forme de réalisation de l'invention, les sous-ensembles réalisés pendant le procédé de fabrication selon l'invention, sont des sous-ensembles finis qui ne nécessitent qu'un détourage et un assemblage avec au moins un autre sous-ensemble pour former le produit d'habillement.

Selon une forme de réalisation de l'invention, le procédé peut comprendre une étape supplémentaire d'application d'au moins un empiècement sur le flanc de textile technique, l'étape d'application étant réalisée avant la mise en forme du flan et préférentiellement par thermocollage. Ainsi, suivant la sélection de la zone d'application de l'empiècement et de la nature de l'empiècement, le produit d'habillement peut présenter des propriétés combinables de renforcement, et/ou d'ergonomie (respect total des mouvements) et/ou d'imperméabilité et/ou ignifuge, etc.

Selon une forme de réalisation de l'invention, l'au moins un empiècement est configuré pour décorer ou renforcer ou apporter une fonction déterminée telle que la réflexion de lumière.

Selon une forme de réalisation de l'invention, l'au moins un empiècement est appliqué partiellement sur le flan sur une zone déterminée.

Selon une forme de réalisation de l'invention, l'au moins un empiècement est configuré pour suivre la déformation du flan.

Selon une forme de réalisation de l'invention, l'empiècement peut être un empiècement de confort configuré pour améliorer le confort comme par exemple des mousses ou du molleton en coton ou en matière synthétique ou tricot 3D. Selon une forme de réalisation de l'invention, l'empiècement de matière de confort ne subit pas les contraintes thermiques du thermoformage de telle sorte que même après mise en forme du flan ledit empiècement conserve ses propriétés, son aspect et son épaisseur.

Selon une forme de réalisation de l'invention, le flan est au moins partiellement déformé plastiquement entre 10% et 70%, préférentiellement entre 20% et 60% et encore plus préférentiellement d'environ 30% à 50%, ou entre 10% et 30%, ou entre 30% et 50% ou entre 50% et 70%.

Selon une forme de réalisation de l'invention, le deuxième sous-ensemble est réalisé comme le premier sous-ensemble.

Selon une forme de réalisation de l'invention, le produit d'habillement peut être formé par une pluralité de sous-ensembles préférentiellement réalisé comme le premier sous-ensemble.

Selon une forme de réalisation de l'invention, le chauffage du flan du premier sous-ensemble est réalisé sur un poste de chauffage indépendant du poste de formage.

Selon une forme de réalisation de l'invention, l'assemblage des sous-ensembles est réalisé par collage ou couture.

Selon une forme de réalisation de l'invention, l'assemblage du premier et du deuxième sous-ensembles est réalisé par thermocollage ou soudure.

L'invention porte également sur un sous-ensemble d'un produit d'habillement, le sous-ensemble étant réalisé en textile technique à partir d'un flan de textile technique, caractérisé en ce que le sous-ensemble est réalisé par déformation irréversible du textile technique qui le compose selon le procédé selon l'invention, ledit sous-ensemble étant configuré pour présenter un volume constant et une tenue tridimensionnelle structurante.

Selon une forme de réalisation de l'invention, le produit d'habillement est un vêtement.

Selon une forme de réalisation de l'invention, le produit d'habillement est une veste ou un manteau ou un pantalon ou un haut.

Selon une forme de réalisation de l'invention, au moins des sous-ensembles composant le produit d'habillement peut être une capuche ou une demi-capuche, une manche, un demi haut du corps latéral avant ou arrière ou un demi haut du corps complet avant ou arrière, une jambe ou un demi bas de corps complet avant ou arrière ou une combinaison de plusieurs de ces pièces.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous :
- La figure 1 est une vue schématique d'un sous-ensemble selon l'invention et plus particulièrement d'une capuche,
- La figure 2 est une vue schématique d'un sous-ensemble selon l'invention et plus particulièrement d'un demi corps de veste,
- Les figures 3A et 3B sont des schémas en coupe du flan avant mise en forme (figure 3A) et après mise en forme (figure 3B),
- La figure 4 est une vue en perspective d'un produit d'habillement réalisé à partir de deux sous-ensembles selon l'invention,
- La figure 5 est une vue de face du produit d'habillement représenté en figure 4,
- La figure 6 est une vue de côté d'un des sous-ensembles composant le produit d'habillement représenté aux figures 4 et 5,
- La figure 7 est une vue en perspective éclaté d'un produit d'habillement réalisé à partir de cinq sous-ensembles selon l'invention,
- La figure 8 est une vue de face du produit d'habillement représenté en figure 7,
- La figure 9 est une vue de côté de trois des sous-ensembles composant le produit d'habillement représenté aux figures 7 et 8.

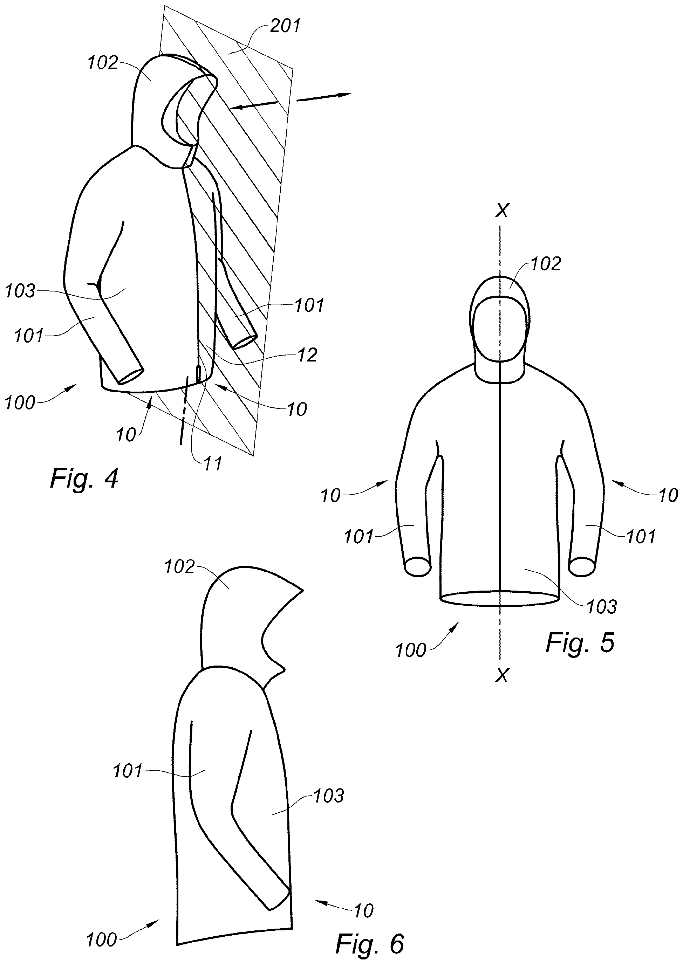

Comme illustré aux figures 4 à 9, selon l'invention le produit d'habillement 100 est une veste à capuche comprenant des manches 101, une capuche 102 et un buste 103.

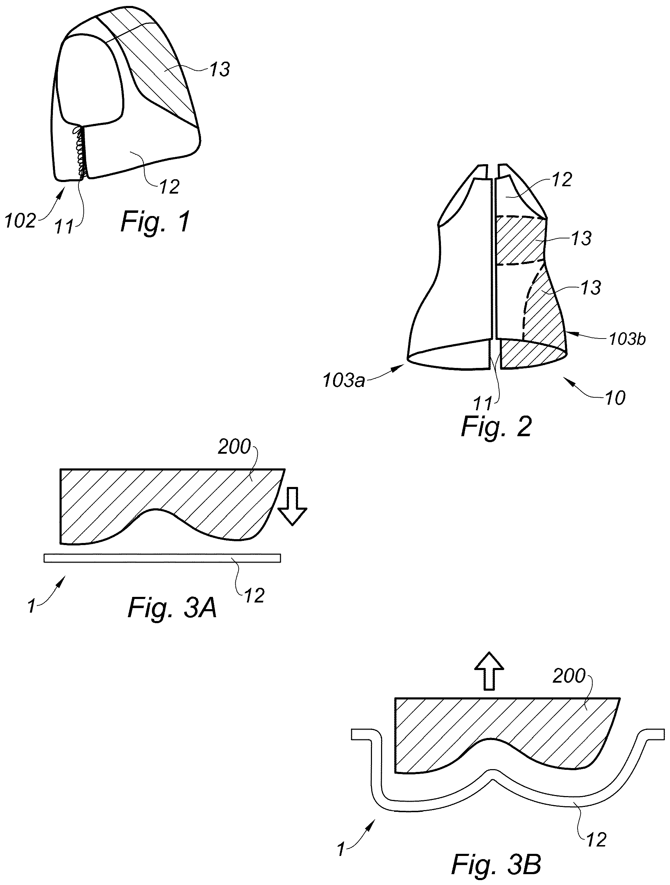

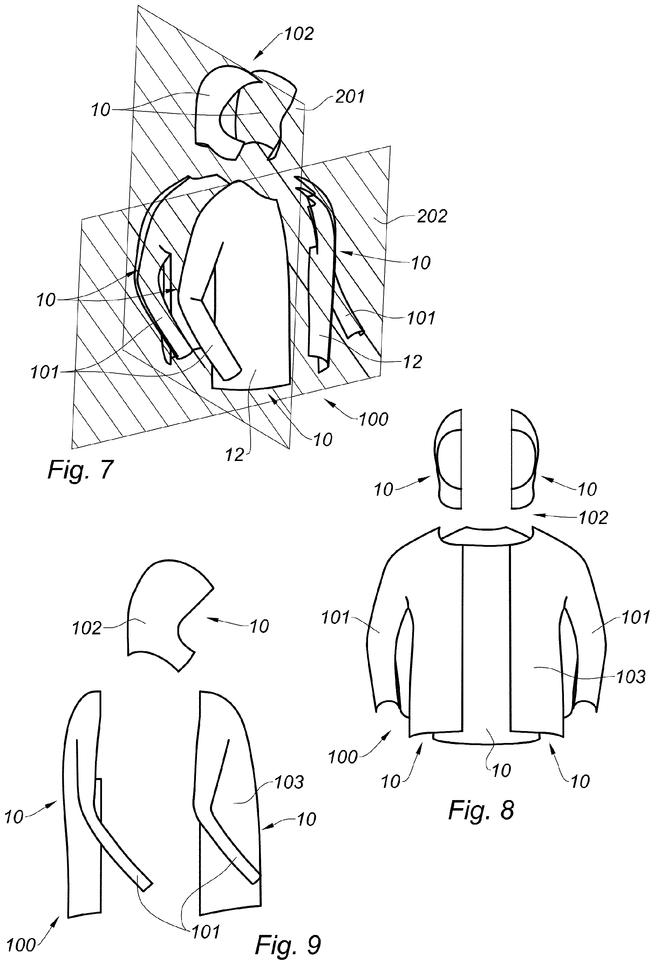

Suivant le mode de réalisation du produit d'habillement 100, le produit d'habillement 100 peut être réalisé par le procédé selon l'invention en deux sous-ensembles 10 comme illustré aux figures 4 à 6 ou bien en cinq sous-ensembles 10 comme illustré aux figures 7 à 9 ou bien en une pluralité de de sous-ensembles dont des exemples tels que la capuche 102 ou le buste 103 sans manche sont illustrés aux figures 1 et 2.

Selon un premier mode de réalisation représenté aux figures 4 à 6, le produit d'habillement 100 est réalisé en deux sous-ensembles 10. Les sous-ensembles 10 sont des demi corps couvrant chacun un côté complet avec une face avant et une face arrière. La zone d'assemblage 11 est réalisée selon un plan sagittal médian 201 représenté en figure 4, le produit d'habillement 100 présente une tenue tridimensionnelle sans être porté grâce au textile technique 12 déformé et composant chaque sous-ensemble 10.

Selon un deuxième mode de réalisation représenté aux figures 7 à 9, le produit d'habillement 100 est réalisé en cinq sous-ensembles 10. Le premier et le deuxième sous-ensembles 10 sont chacun une demi-capuche, le troisième sous-ensemble 10 est un demi corps face arrière, le quatrième et le cinquième sous-ensembles 10 sont chacun un quart de corps avant. Les zones d'assemblages pour ce deuxième mode de réalisation sont représentées par les plans 201 (sagittal médian) et 202 (transverse médian). Comme représenté en figure 7, le produit d'habillement 100 présente une tenue tridimensionnelle sans être porté et ce même avant assemblage des différents sous-ensembles 10 grâce au textile technique 12 déformé et composant chaque sous-ensemble 10.

Selon une variante de réalisation, le produit d'habillement 100 peut être réalisé avec un autre découpage de sous-ensemble et notamment comprenant des sous-ensembles 10 tels que ceux représentés aux figures 1 et 2 à savoir une capuche complète 102 avec une zone d'assemblage 11 en textile technique 12 présentant un empiècement 13 de décoration ou de protection ou de renforcement ou autre sur l'arrière de la capuche 102. En outre, un autre sous-ensemble 10 peut être un demi-buste 103a, 103b sans manche, comme illustré en figure 2. Les deux sous-ensembles 10 de demi-buste 103a, 103b sont en textile technique 12 et l'un des deux présente deux empiècements 13 positionnés sélectivement pour des fonctions déterminées de renforcement et de réfléchissement de la lumière par exemple.

Aux figures 3A et 3B, est illustré le principe de mise en forme et la structure du textile technique 12 utilisé pour confectionner le produit d'habillement 100 selon l'invention. Avant mise en forme, le textile technique 12, ici représenté avec une seule couche, est plat comme illustré en figure 3A. Le flan de textile technique utilisé pour la formation d'un sous-ensemble est rectangulaire ou carré et une forme déterminée 200 vient s'appliquer contre ledit flan une chauffé. Après mise en forme comme illustré en figure 3B, le flan est plus ou moins déformé selon la forme déterminée de l'outillage. Les bords du flan s'ayant pas pris la forme déterminée, sont parés et enlevés.

Bien entendu, l'invention n'est pas limitée aux modes de réalisation décrits et représentés aux figures annexées. En effet, l'invention est illustrée par un exemple de veste à capuche mais le produit d'habillement pourrait être un autre type de haut avec ou sans capuche, ou un bas tel un pantalon. Des modifications restent possibles, notamment du point de vue de la constitution des divers éléments ou par substitution d'équivalents techniques, sans sortir pour autant du domaine de protection de l'invention.

## Revendications

1. Produit d'habillement (100) comprenant au moins un buste (103), et deux manches (101) ou deux jambes et un bassin, **caractérisé en ce que** le produit d'habillement (100) est formé d'au moins deux sous-ensembles (10), chaque sous-ensemble (10) étant en textile technique (12) au moins partiellement déformé plastiquement entre 10% et 70% délimitant ainsi chacun un volume ouvert, les deux sous-ensembles (10) étant réunis par une zone d'assemblage (11) continue s'inscrivant dans un plan transverse médian (202).

2. Produit d'habillement selon la revendication 1, dans lequel l'assemblage du premier et du deuxième sous-ensembles (10) est réalisé par thermocollage ou soudure.

3. Produit d'habillement selon l'une quelconque des revendications 1 ou 2, dans lequel chaque sous-ensemble (10) peut être sélectionné parmi une capuche (102) ou une demi-capuche ou une manche (101) ou un demi haut du corps latéral avant ou arrière ou un demi haut du corps complet avant ou arrière ou une jambe ou un demi bas de corps complet avant ou arrière ou une combinaison de plusieurs de ces pièces.

4. Produit d'habillement selon l'une quelconque des revendications 1 à 3, dans lequel au moins un sous-ensemble (10) comprend un empiècement (13) réfléchissant et/ou de renfort et/ou de confort.

5. Procédé de fabrication d'un vetement (100) selon l'une quelconque des revendications 1 à 4, **caractérisé en ce que** le procédé de fabrication comprend au moins les étapes suivantes :
- Création d'un premier sous-ensemble (10) et d'un deuxième sous-ensemble (10) par :
- Fourniture d'un flan de textile technique,
- Mise en forme du flan par chauffage et emboutissage selon une forme déterminée de manière à déformer le flan selon la forme déterminée, la déformation étant au moins partielle entre 10% et 70% et irréversible et réalisée sous chaleur, l'emboutissage étant réalisé sur un poste de formage comprenant au moins un outillage de déformation (200) non chauffé et conforme à la forme déterminée, le flan déformé présentant un volume déterminé constant irréversible,
- Détourage du flan mis en forme,
- Assemblage du premier et du deuxième sous-ensembles (10).

6. Procédé de fabrication selon la revendication 5, dans lequel le textile technique (12) est un complexe textile comprenant une pluralité de couches dont au moins une en textile.

7. Procédé de fabrication selon l'une quelconque des revendications 5 ou 6, dans lequel l'assemblage du premier et du deuxième sous-ensembles (10) est réalisé par thermocollage ou soudure.

8. Procédé de fabrication selon l'une quelconque des revendications 5 à 7, comprenant une étape supplémentaire d'application d'au moins un empiècement (13) sur le flanc de textile technique, l'étape d'application étant réalisée avant la mise en forme du flan.

9. Procédé de fabrication selon la revendication 8, dans lequel l'étape d'application est réalisée par thermocollage.
